# EUROPÄISCHE PATENTANMELDUNG

(11) **EP 0 597 559 A2**
(43) Veröffentlichungstag der Anmeldung: **18.05.1994**
(21) Anmeldenummer: 93250294.1
(22) Anmeldetag: 29.10.1993
(51) Int. Cl.: D06N 3/00, D06N 7/00, B05C 9/00

(54) **Verfahren zum einseitigen Beschichten von Flächengebilden aus Fasern mit Kunststoff, Vorrichtung zur Durchführung des Verfahrens und Verwendung der Verfahrensprodukte**

(30) Priorität: 10.11.1992 DE 4238764
(71) Anmelder: OTTO GOLZE & SÖHNE GmbH, D-31789 Hameln (DE)
(72) Erfinder: Lutterbeck, Joachim, Dr., D-58515 Lüdenscheid (DE); Vorlage, Andreas, D-58642 Iserlohn (DE); Eulenstein, Thomas, D-59174 Kamen (DE)
(74) Vertreter: UEXKÜLL & STOLBERG

(57) **Zusammenfassung**

Es wird ein Verfahren zum einseitigen Beschichten von Flächengebilden aus ungeordneten oder geordneten Fasern mit Kunststoff beschrieben, das dadurch gekennzeichnet ist, daß das Flächengebilde von oben auf eine Schicht aus Kunststoffteilchen, die sich auf einer ebenen Unterlage befindet, aufgebracht und gegebenenfalls in die Schicht eingedrückt wird, die Kunststoffteilchen dann durch Erwärmen geschmolzen werden und anschließend der sich dadurch gebildete Verbund aus Faserflächengebilde und Kunststoff abgekühlt wird. Das neue Verfahren liefert Beschichtungen mit hoher Oberflächenqualität, gleichmäßiger Eindringtiefe und guter Verbundhaftung. Es gestattet die Verwendung von umweltfreundlichen Kunststoffen, so daß auf den Einsatz von PVC verzichtet werden kann. Besonders geeignet ist das Verfahren für Faserflächengebilde aus lose geschütteten Fasern ohne Orientierung oder aus Fasern, die zuvor geschnitten und senkrecht zur Unterlage in die Schicht aus Kunststoffteilchen eingebracht werden. Die erfindungsgemäß hergestellten Produkte können insbesondere als Teppiche, Bodenmatten und Auskleidungen verwendet werden. Eine zur Durchführung des Verfahrens geeignete Vorrichtung wird ebenfalls beschrieben.

## Beschreibung

Die Erfindung betrifft ein Verfahren zum einseitigen Beschichten von Flächengebilden aus ungeordneten oder geordneten Fasern mit Kunststoff, eine Vorrichtung zur Durchführung dieses Verfahrens und die Verwendung der erhaltenen Verfahrensprodukte.

Zur Beschichtung von Faserflächengebilden mit Kunststoff sind eine Vielzahl von Verfahren und Vorrichtungen entwickelt worden. Dabei wird der Kunststoff als flüssige Dispersion, Paste oder Lösung, als Schmelze oder als Pulver aufgetragen. Eine Verbindung von Fasern und Kunststoff erfolgt in der Regel von oben auf die unten liegende Faserschicht.

So gibt es Extrusionsbeschichtungsanlagen, die im wesentlichen aus einem Einschneckenextruder mit Breitschlitzdüse und einer Kaschiereinrichtung (Laminator) bestehen. Hierbei wird in einem Arbeitsgang der Film gebildet und die Kaschierung des noch zähflüssigen Materials auf dem Träger durchgeführt. Dieses Verfahren ist für unterschiedlichste Kunststoffe geeignet. Das Granulat wird im Extruder auf Schmelztemperatur erwärmt und tritt durch die Breitschlitzdüse aus. Von dort läuft es auf das zu beschichtende Material und wird mit einer Walze unter Druck laminiert. Der Belag kann gegebenenfalls mit einem Muster, z.B. einem Waffelmuster, versehen werden. Die Beschichtung von Papier mit Polyethylen wird mit diesem Verfahren praktiziert. Für die Beschichtung von Faserflächengebilden ist dieses Verfahren weniger geeignet, da die Kunststoffschmelze in der Regel hier nicht mit einer Walze unter Druck auflaminiert werden kann. Dadurch ergeben sich zum einen keine glatten Oberflächen der Beschichtung und zum anderen ungleichmäßige Eindringtiefen in das Faserflächengebilde. Hinzu kommt, daß sich nach Austritt der Schmelze aus der Breitschlitzdüse sofort eine dünne verfestigte Schicht bildet, die zu einer schlechten Verbundhaftung zwischen Faserflächengebilde und Kunststoff führt. Darüber hinaus sind die Investitionskosten für eine derartige Extrusionsanlage verhältnismäßig hoch.

Ein weiteres bekanntes Beschichtungsverfahren ist das Kalandrieren. Es wird vorwiegend dazu benutzt, Papierbahnen mit geschlossenen Polyethylenbahnen zu versehen. Kalanderanlagen sind Systeme aus zwei bis fünf zueinander angeordneten, gegenläufigen Walzen, an denen das zu beschichtende Material vorbeigeführt wird. Dem Kalander nachgeschaltet sind Kühlwalzen und, falls erforderlich, auch Prägewalzen, die den Überzug mit einem beliebigen Muster ausstatten. Voraussetzung zur Beschichtung mittels Kalander ist, daß das zu beschichtende Material in sich eine feste Trägerbahn bildet, das sich um Walzen oder Umlenkrollen führen läßt. Diese Voraussetzung erfüllen aber nur wenige Faserflächengebilde. Lose geschüttete, geschnittene oder verschränkte Fasern lassen sich nach diesem Verfahren nicht mit Kunststoff beschichten, da sie keine Trägerbahn bilden.

Beim Walzenschmelzverfahren werden Anlagen verwendet, bei denen rieselfähiger, thermoplastischer Kunststoff auf zwei beheizte Schmelzwalzen aufgegeben wird. Der durch die Walzen erwärmte Kunststoff bildet im Walzenspalt einen Wulst. Durch Friktion und eine geeignete Temperatureinstellung wird der Kunststoff von einer dieser Walzen als dünner Film übernommen, d.h. er läuft um sie herum. Das zu beschichtende Material wird an dieser Walze vorbeigeführt und übernimmt seinerseits den plastifizierten Kunststoff. Über den Walzenspalt ist die Filmstärke regelbar. Der zunächst nur haftfest mit dem Träger verbundene Film muß dann wieder mit einer Kaschierwalze aus Gummi fester eingedrückt werden. Zur Erzielung höherer Durchsätze kann das System auch aus mehreren Walzen bestehen. Generell eignet sich das Verfahren aber nur für geringe Schichtstärken und hohe Abzugsgeschwindigkeiten. Für Schichtstärken von mehreren Millimetern wie bei Rückenbeschichtungen von als Teppich, Fußmatten usw. dienenden Faserflächengebilden müßten mehrere Kunststoffbahnen nacheinander von mehreren Walzensystemen aufgetragen werden. Im Prinzip ergeben sich die gleichen Nachteile wie bei der Extrusionsbeschichtung. Die Investitionskosten liegen allerdings noch sehr viel höher.

Weiterhin ist es bekannt, den Kunststoff als Lösung, Paste oder Dispersion auf das Faserflächengebilde aufzubringen. Auch hier ergeben sich Schwierigkeiten bezüglich der Oberflächenbeschaffenheit der Beschichtung und der Eindringtiefe in das Faserflächengebilde. Außerdem müssen Dispersions- bzw. Lösungsmittel nach dem Auftrag entfernt werden, was einen hohen Energieaufwand erfordert. Darüber hinaus sind Dispersions- bzw. Lösungsmittel in aller Regel umweltbedenklich, so daß die erforderliche Entsorgung einen zusätzlichen hohen verfahrenstechnischen Aufwand erfordert.

Es ist auch möglich, thermoplastische Kunststoffe als Pulver direkt zu verarbeiten. Diese Methode wird vornehmlich bei Kunststoffen angewendet, die sich bei Raumtemperatur nur schlecht oder gar nicht in eine flüssige Phase (Lösung, Dispersion, Paste) überführen lassen. Zu diesen Kunststoffen gehören beispielsweise Polyamide, weichmacherarmes oder -freies Emulsions-PVC und die Polyolefine. Der Kunststoff kann durch Streuverfahren, Sintern, Wirbelsintern oder elektrostatische Sprühverfahren aufgebracht werden. Solche Pulver-Technologien sind besonders dort vorteilhaft, wo dicke Beschichtungen in einem einzigen Arbeitsgang aufgetragen werden sollen. Insbesondere kann die Kunststoffbeschichtung von Flächen oder anderen Metallteilen nach diesem Verfahren erfolgen. Metalle lassen sich für die Beschichtung gut vorbereiten, indem die Teile mit Haftvermittlern versehen werden oder zuvor sandgestrahlt werden. Für Faserflächengebilde ist dieses Verfahren ungeeignet, da der Pulverauftrag von oben auf das Faserflächengebilde erfolgt und somit ähnlich den zuvor beschriebenen Verfahren keine glatten Oberflächen der Beschichtung und keine konstanten Eindringtiefen erzielt werden können.

Die Beschichtung nach dem Sinterverfahren geschieht durch Aufrieseln des Pulvers oder Verwirbelung mit Preßluft (Wirbelsintern). Das zu beschichtende Gut muß auf Temperaturen oberhalb der Schmelztemperatur des Kunststoffpulvers vorgeheizt werden, damit der Kunststoff anschmilzt. Überschüssiges Material wird mit einem Abstreifer bzw. einer Absaugung entfernt und die Kunststoffschicht in einem anschließenden Durchlaufofen komplett aufgeschmolzen. Neben den bekannten Problemen der Oberflächenbeschaffenheit der Beschichtung und der Eindringtiefe in das Faserflächengebilde ergeben sich weitere Schwierigkeiten dadurch, daß das zu beschichtende Gut im Vergleich zum Kunststoff eine hohe Wärmekapazität und thermische Stabilität haben muß. Dies ist bei Faserflächengebilden aus Natur- oder Chemiefasern in der Regel nicht der Fall.

Das elektrostatische Sprühverfahren scheidet für Faserflächengebilde von vornherein aus, da es sich nur für metallische Gegenstände eignet. Das Kunststoffpulver wird mit einer auf Potential gebrachten Sprühpistole oder Düse aufgeschleudert. Das zu beschichtende Material muß entsprechend leitfähig sein, um geerdet werden zu können.

Im Gegensatz zu den oben beschriebenen Verfahren ist es beispielsweise aus der Florteppichherstellung bekannt, den Kunststoff von unten mit der darüberliegenden Faserschicht zu verbinden. Das Fasermaterial wird dabei auf ein Kunststoffträgermaterial aufgebracht, das aus einer niedrig-viskosen Lösung, Paste, Dispersion oder einem Organosol von Kunststoff besteht. Dieses Trägermaterial selbst befindet sich wiederum auf einer Unterlage, z.B. einem Transportband, und kann durch Gießen oder mit verschiedenen Streichverfahren hergestellt werden. Besonders geeignet für diese Vorgehensweise ist PVC und zwar in Form von Plastisolen (streichfähige Pasten). PVC ist jedoch aus Umweltschutzgründen bedenklich, da die Entsorgung zu Problemen führt. Bei der Verbrennung von PVC fallen ätzendes, korrosives Chlorwasserstoffgas und andere gesundheitsschädliche Stoffe wie Dioxine an. Auch die Entsorgung auf Deponien ist problematisch, weil PVC-Plastisole erhebliche Mengen an Weichmachern enthalten und diese Weichmacher durch Ausschwitzen in die Umwelt entweichen und beispielsweise das Grundwasser gefährden können. Es bestehen deshalb starke Bestrebungen auf den Einsatz von PVC zu verzichten und dafür andere, umweltfreundlichere Kunststoffe einzusetzen.

Der Erfindung liegt dementsprechend die Aufgabe zugrunde, das Beschichten von Faserflächengebilden mit Kunststoff so zu verbessern, daß Beschichtungen mit hoher Oberflächenqualität, gleichmäßiger Eindringtiefe und guter Verbundhaftung erhalten werden. Gleichzeitig soll das Beschichten einfacher und kostensparender als bisher durchführbar sein. Schließlich soll das Beschichten mit umweltfreundlichen Kunststoffen durchführbar sein, so daß auf den Einsatz von umweltbedenklichen Werkstoffen wie PVC verzichtet werden kann.

Zur Lösung dieser Aufgabe wird ein Verfahren zum einseitigen Beschichten von Flächengebilden aus ungeordneten oder geordneten Fasern mit Kunststoff vorgeschlagen, das dadurch gekennzeichnet ist, daß das Flächengebilde von oben auf eine Schicht aus Kunststoffteilchen, die sich auf einer ebenen Unterlage befindet, aufgebracht und gegebenenfalls in die Schicht eingedrückt wird, die Kunststoffteilchen dann durch Erwärmen geschmolzen werden und anschließend der sich dadurch gebildete Verbund aus Fasergebilde und Kunststoff abgekühlt wird.

Gegenstand der Erfindung ist ferner eine Vorrichtung zur Durchführung des erfindungsgemäßen Verfahrens, die gekennzeichnet ist durch
a) ein Transportband (1) zur Aufnahme der Schicht aus Kunststoffteilchen (14),
b) eine Dosiervorrichtung (3) zur Aufbringung der Schicht aus Kunststoffteilchen (14) auf das Transportband (1),
c) eine Zuführungsvorrichtung (6) zur Aufbringung des Faserflächengebildes (15) oder die das Faserflächengebilde (15) bildenden Fasern auf die Schicht aus Kunststoffteilchen (14),
d) eine Heizstrecke (7),
e) eine Kühlstrecke (12) und
f) eine Aufnahmevorrichtung (13) für das einseitig beschichtete Faserflächengebilde (16).

Gegenstand der Erfindung ist ferner die Verwendung der Produkte des erfindungsgemäßen Verfahrens als Teppiche, Bodenmatten und Auskleidungen.

Bevorzugte Ausführungsformen und Vorteile der Erfindung ergeben sich aus der nachfolgenden Beschreibung und den Unteransprüchen.

Es hat sich überraschend ergeben, daß mit der Erfindung gegenüber dem Stand der Technik kürzere Verarbeitungszeiten, ein verringerter Energieaufwand und eine größere Rezepturbreite bezüglich der Zusammensetzung der Kunststoffbeschichtung möglich sind. Hinzu kommt, daß die Lagerung der verwendeten Kunststoffpulver unproblematisch ist. Schließlich besitzen die erhaltenen Produkte in vielen Fällen bessere Eigenschaften als in herkömmlicher Weise beschichtete Faserflächengebilde.

Unter Flächengebilde aus ungeordneten oder geordneten Fasern bzw. Faserflächengebilden werden Flächengebilde aus natürlichen oder synthetischen Fasern verstanden, die eine durchlässige Oberfläche aufweisen, so daß das Kunststoffpulver bzw. die durch Erwärmen erzeugte Kunststoffschmelze in das Faserflächengebilde eindringen kann.

Im folgenden soll die Erfindung unter Bezugnahme auf die Figuren erläutert werden. Diese zeigen:
Figur 1: eine schematische Darstellung des erfindungsgemäßen Verfahrens und der erfindungsgemäßen Vorrichtung zur Durchführung des Verfahrens.
Figur 2: eine Dosiervorrichtung zur Aufbringung der Schicht aus Kunststoffteilchen.
Figur 3: eine weitere Dosiervorrichtung zur Aufbringung der Schicht aus Kunststoffteilchen.

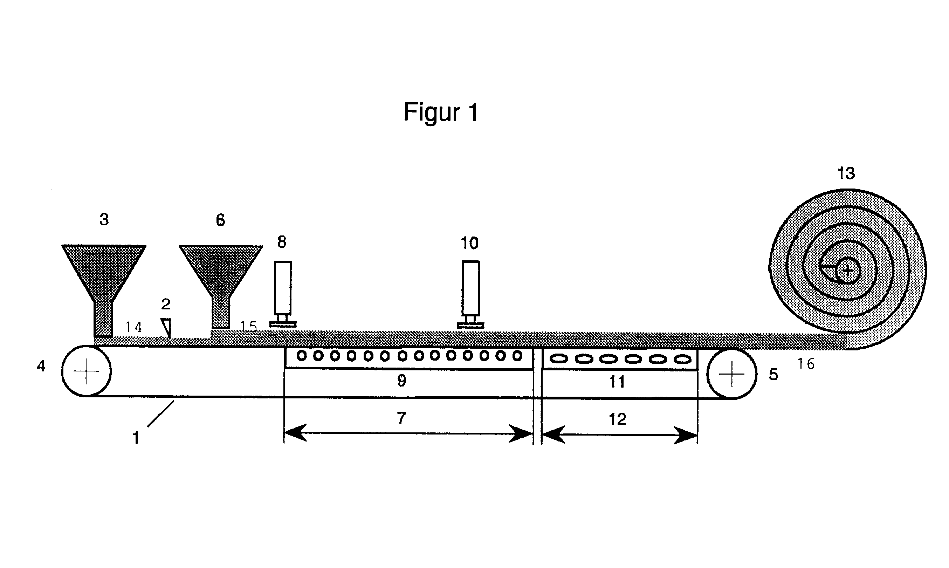

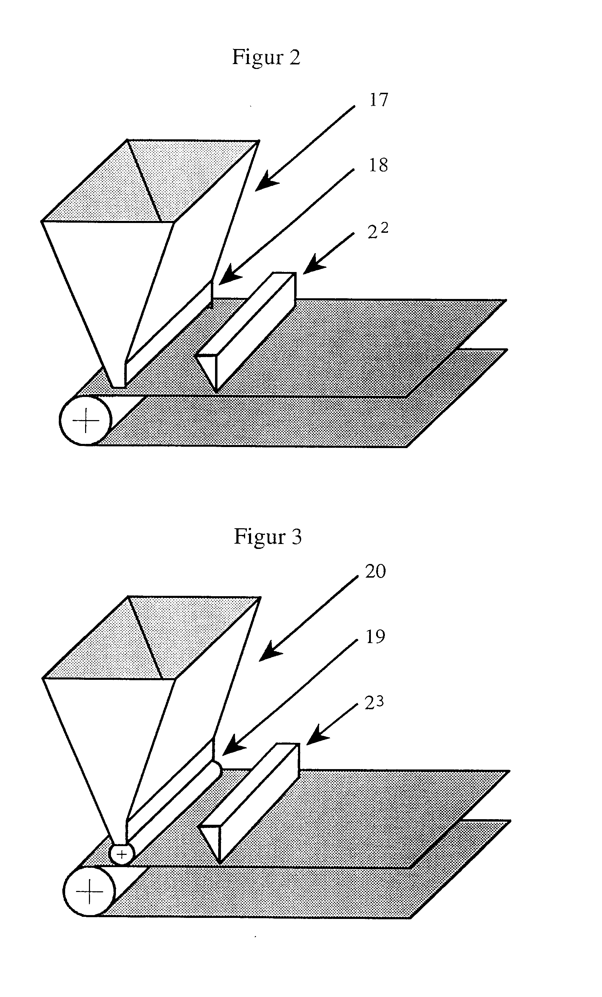

Das erfindungsgemäße Verfahren wird vorzugsweise kontinuierlich durchgeführt (Figur 1). Dazu werden Kunststoffteilchen, vorzugsweise mit einer Korngröße von 30 bis 500 um, auf eine ebene Unterlage aufgebracht. Als Unterlage eignet sich ein endloses Transportband (1), das über die Antriebsrollen (4) und (5) geführt wird. Die Zufuhr der Kunststoffteilchen kann in beliebiger Weise erfolgen. Besonders geeignet sind Dosiertrichter gemäß den Figuren 2 und 3. Der Dosiertrichter kann direkt auf die ebene Unterlage aufgesetzt werden und weist einen Fülltrichter (17) mit einer Vorderkante (18) auf. Die Vorderkante (18) des Dosiertrichters ist höhenverstellbar, um die Schichtdicke variieren zu können. Eine Regelung der Schüttmenge entfällt, da die Kunststoffteilchen auf das Transportband (1) fallen und durch die Transportbandbewegung zwangsgefördert werden. Alternativ kann die Dosiervorrichtung eine genutete Dosierwalze (19) mit aufgesetztem Dosiertrichter (20) sein (Figur 3). Die Regelung der Schüttmenge erfolgt hier über die Drehzahl der Walze und über die Schieberstellung (Schieber nicht dargestellt). Es kann damit, wenn der Antrieb der Walze über das Transportband erfolgt, sehr genau dosiert werden. Dem Dosiertrichter ist ein Rakel (2, 22, 23) zur Vergleichmäßigung der Schichtdicke des Kunststoffteilchenbettes nachgeschaltet.

Die Dicke der Schicht aus Kunststoffteilchen kann in Abhängigkeit vom Fasermaterial und dem Beschichtungszweck in weiten Grenzen variiert werden. Bei der Herstellung von Florteppichen und Bodenmatten aus geschnittenen Kokosfasern werden z.B. Schichtdicken von 1 bis 10 und vorzugsweise 2 bis 4 mm verwendet.

Nach Ausbildung der gleichmäßigen Schicht aus Kunststoffteilchen wird das Faserflächengebilde aufgebracht. Der Vorteil dieser Verfahrensweise ist, daß Walzen zur Egalisierung der Kunststoffschicht nicht benötigt werden. Der maschinelle Aufwand ist insgesamt weit geringer als bei allen bisher bekannten Verfahren.

Von Bedeutung ist die Beschaffenheit der Kunststoffteilchen. Die Teilchengröße des Kunststoffes muß so gewählt werden, daß ein gleichmäßiges Auftragen zu einer einheitlichen Schichtdicke möglich ist. Außerdem hängt die richtige Wahl der Körnung der Kunststoffteilchen auch davon ab, in welcher Form das Faserflächengebilde (Fasern, Gewebe, Gewirke, Filze usw.) aufgebracht wird. Es hat sich als vorteilhaft erwiesen, daß die Kunststoffteilchen in ihrer Größe so beschaffen sind, daß die Enden des einzubringenden Fasermaterials leicht eindringen können und sofort allseitig von Pulver umschlossen werden. Dies ist insbesondere bei Korngrößen im Bereich von 30 bis 500 um der Fall.

Durch sein Eigengewicht liegt das Faserflächengebilde auf der Schicht aus Kunststoff auf und dringt gleichmäßig in dieses ein. Bei vielen Faserflächengebilden hat es sich allerdings als günstig erwiesen, das Faserflächengebilde nach seiner Aufbringung auf die Schicht aus Kunststoffteilchen zusätzlich durch eine Andrückvorrichtung (8) in das Kunststoffteilchenbett einzudrücken, so daß beispielsweise bei der Herstellung eines Florteppichs die Florfasern auf das Trägerband stoßen.

Das Kunststoffteilchenbett mit dem eingedrückten Fasermaterial durchläuft dann eine Heizstrecke (7). Es wird vorzugsweise von unten geheizt, so daß das Kunststoffpulver aufschmilzt und die Fasern des aufgebrachten Faserflächengebildes von der Schmelze umschlossen werden. Die Erwärmung kann über Kontaktplatten (9), die mit Öl oder elektrischen Widerstandselementen erwärmt werden, erfolgen. Die Erwärmung kann aber auch durch einen Ofen, der das Transportband umschließt, durch Infrarotstrahler oder bei polaren Kunstsstoffmaterialien durch ein Mikrowellenfeld erfolgen.

Vor Ende der Heizstrecke (7), vorzugsweise nach 2/3 der Heizstrecke (7), wird das Fasermaterial gegebenenfalls nochmals von einer zweiten Andrückvorrichtung (10) in das nun vollständig oder zumindest teilweise als Schmelze vorliegende Kunststoffbett gedrückt. Dabei sind Andrückdauer und -kraft in Abhängigkeit von dem zu beschichtenden Fasermaterial und dem eingesetzten Kunststoffmaterial so zu wählen, daß das Faserflächengebilde einerseits nicht aus der Schmelze zurückfedert (Überbrückung der relaxierenden viskoelastischen Verformung der Schmelze) und andererseits nicht durch eine zu große Andrückkraft beschädigt wird.

Anschließend durchläuft das Transportband (1) mit der Kunststoffschmelze und dem eingebetteten Fasermaterial eine Kühlstrecke (12), die in der Regel kürzer als die Heizstrecke (7) ist. Im allgemeinen ist die Kühlstrecke etwa 1/4 bis 1/2 so lang wie die Heizstrecke. Die Kühlung kann wieder mittels Kontaktplatten (11) erfolgen, wobei die Kühlung der Kontaktplatten (11) durch Wasser erfolgt. Beim Durchlauf durch die Kühlstrecke erstarrt die Kunststoffbeschichtung des Fasermaterials und erhält die Stabilität, um beispielweise von einem nachfolgenden Wickler (13) abgezogen und aufgewickelt zu werden.

Falls gewünscht, kann zur Erhöhung der Querreißfestigkeit der Kunststoffbeschichtung vor Auftrag der Schicht aus Kunststoffteilchen kontinuierlich eine Folie, ein Gewebe oder ein ähnliches, reißfestes Flächengebilde auf die ebene Unterlage aufgebracht werden. Durch die Erwärmung in der Heizstrecke (7) und die anschließende Abkühlung in der Kühlstrecke (12) erfolgt auch hier eine Verbundbildung mit dem Kunststoffbeschichtungsmaterial.

In einer bevorzugten Ausführungsform dienen das erfindungsgemäße Verfahren und die erfindungsgemäße Vorrichtung zur Herstellung eines Florteppichs. In diesem Fall ist die Zuführvorrichtung (6) eine Vorrichtung zur Ausbildung eines Florstranges aus geschnittenen Florfasern, wie sie beispielsweise aus der DE-PS 24 10 710, auf deren Offenbarung hiermit Bezug genommen wird, bekannt ist. Dabei ist es bevorzugt, daß die Andrückvorrichtung (10) so ausgebildet ist, daß sie sich mit der gleichen Geschwindigkeit wie das Transportband (1) bewegt, so daß die Florfasern nicht durch eine Relativbewegung zwischen Andrückvorrichtung und Transportband aus der senkrechten Stellung verschoben werden.

Die Andrückvorrichtung (10) wird, nachdem sie sich eine gewisse Zeit zusammen mit dem Transportband vorwärts bewegt hat, entgegen der Bewegungsrichtung des Transportbandes zurückgeführt und steht dann wieder für einen oder mehrere Andrückvorgänge zur Verfügung. Der Mechanismus für die Bewegung der Andrückvorrichtung (10) ist in Figur 1 nicht dargestellt.

Das erfindungsgemäße Verfahren eignet sich zur Beschichtung von Faserflächengebilden mit allen thermoplastischen Kunststoffen, die eine ausreichende thermische Stabilität besitzen. Hierzu gehören beispielsweise Polyethylen hoher Dichte (HDPE), Polyethylen mittlerer Dichte (MDPE), Polyethylen niedriger Dichte (LDPE), Polypropylen (PP), Polyamid (PA), Polybutylentherephthalat (PBTP)), Polyethylentherephthalat (PETP), Polyisobutylen (PIB), Polytetrafluorethylen (PTFE), Polyvinylchlorid (PVC) und thermoplastisches Polyurethan (TPU). Wie schon eingangs erwähnt, können erfindungsgemäß Kunststoffmaterialien verarbeitet werden, die weniger Umweltprobleme mit sich bringen als PVC. Besonders bevorzugt sind unter diesem Gesichtspunkt Polyolefine. Hierbei handelt es sich um teilkristalline Thermoplaste. Sie sind ohne Zusätze physiologisch unbedenklich, chemisch gut beständig und außerdem preisgünstig. Sie lassen sich nach fast allen üblichen Verfahren der Kunststoffverarbeitungstechnik verarbeiten. Von den Polyolefinen kommen hauptsächlich Polyethylen und Polypropylen zum Einsatz. Bodenmatten sollen beispielsweise ein weichelastisches Verhalten aufweisen. Da Polypropylen gegenüber Polyethylen eine höhere Steifigkeit, Härte und Festigkeit aufweist, wird Polyethylen für derartige Produkte bevorzugt, während Polypropylen für steifere Florteppichprodukte zum Einsatz kommt.

Zur Einstellung der Eigenschaften des fertigen beschichteten Faserflächengebildes können die eingesetzten Polyolefine wie Polyethylen dadurch modifiziert werden, daß Mischungen verschiedener Polyolefine und gegebenenfalls Additive eingesetzt werden. Die Rezeptur des Kunststoffpulvers kann also in weiten Grenzen variiert werden, wobei ein weiterer Vorteil darin besteht, daß einfach Pulver von verschiedenen Polyolefinen und gegebenenfalls Additiven miteinander gemischt und in Form dieser Mischung verwendet werden können, ohne daß zuvor eine Homogenisierung durch gemeinsames Aufschmelzen und Durchmischen erfolgen muß.

Bei der Herstellung von Florteppichen bzw. Bodenmatten besteht ein bevorzugtes Flormaterial aus geschnittenen Kokosfasern. Um die für Florteppiche und Bodenmatten aus Kokosfasern gewünschten Eigenschaften wie Noppenfestigkeit, Kältefestigkeit, Querreißfestigkeit und Flexibilität zu erzielen, hat es sich als vorteilhaft erwiesen, wenn als Kunststoffbeschichtungsmaterial eine Mischung aus Polyolefin wie Polyethylen und einem durch "innere Weichmachung" modifizierten Polyolefin wie Polyethylen verwendet wird. Bei der inneren Weichmachung handelt es sich um einen Vorgang, der in den molekularen Aufbau des Polyolefins eingreift. So ist Polyethylen ein teilkristalliner Kunststoff, bei dem die Eigenschaften wie Härte, Steifigkeit und Zähigkeit durch den Kristallinitätsgrad bestimmt werden. Sollen diese Eigenschaften verändert werden, so muß die Kristallinität beeinflußt werden. Sinnvoll ist nur eine Verminderung der kristallinen Anteile im Polyethylen. Diese Verminderung kann durch Copolymerisation erreicht werden. Das Copolymerisat ist ein Polymer, das aus zwei oder mehr verschiedenen Grundbausteinen aufgebaut ist. Durch Copolymerisation lassen sich die Eigenschaften von hochmolekularen Stoffen oft in weiten Grenzen variieren. Es werden Störstellen in die Methylenkettenstruktur des Polyethylens eingefügt, so daß diese Kettenstruktur in Abschnitte begrenzter Kristallisierbarkeit aufgeteilt wird. Durch diese Verringerung der Kristallinität wird die Schmelztemperatur zu niedrigeren Temperaturen hin verschoben. Durch die Copolymerisation des Ethylens mit geringen Mengen von Propylen, Buten-1, Vinylacetat oder Acrylsäureester werden polyethylenähnliche Produkte gewonnen, die im wesentlichen ähnliche Eigenschaften wie mehr oder weniger verzweigte Polyethylene haben. Die Störung der Kristallinität ist primär abhängig von der Zahl der eingeführten Verzweigungsstellen und sekundär von der Länge der Seitengruppe.

Gegenüber Polyethylen weisen die Copolymerisate des Ethylens etwas geringere Dichten auf. Sie unterscheiden sich von Polyethylen durch verringerte Härte, höhere Flexibilität, höhere Schlagfestigkeit auch bei sehr niedrigen Temperaturen, erhöhte Beständigkeit gegen Spannungsrißkorrosion, erhöhte Füllstoffverträglichkeit, verbesserte Transparenz, gesteigerte Permeabilität und Quellbarkeit.

Als bei der Verarbeitung von Kokosfasern zur Herstellung von Florteppichen und Bodenmatten geeignete Copolymere haben sich solche aus Ethylen und Propylen sowie aus Ethylen und Carboxylgruppen enthaltenden ungesättigten Verbindungen wie Acrylsäure erwiesen. Alternativ zur Copolymerisation können Carboxylsäuregruppen auch in bekannter Weise durch Aufpfropfen in die Polyethylenstruktur eingebracht werden.

Besonders vorteilhaft für die Herstellung von Florteppichen und Bodenmatten aus Kokosfasern sind Polyethylene niedriger Dichte (LDPE), die Carboxylsäuregruppen enthalten, insbesondere durch Copolymerisation mit Butylacrylestern, Acrylaten, Acrylsäure und Vinylacetat, wobei letzteres aus Kostengründen bevorzugt eingesetzt wird. Gut geeignet sind im Handel erhältliche Ethylencopolymerisate, die neben Acrylsäure n-Butylacrylestergruppen enthalten. Vorzugsweise liegt der Gehalt an Carboxylsäuregruppen im Bereich von 10 bis 30 Gew.%.

Weiterhin hat es sich als vorteilhaft erwiesen, Kunststoffpulvern auf Basis von Polyolefinen Gleitmittel zuzusetzen. Diese dienen zur Erhöhung der Fließfähigkeit und zur Erzielung glatter Oberflächen. Besonders geeignet sind kurzkettige Kohlenwasserstoffe wie Paraffine, Wachse und Stearate (einschließlich Stearin), vorzugsweise mit Schmelzpunkten im Bereich von 60 bis 150_{°}C. Sie werden vorzugsweise in einer auf das Kunststoffpulver bezogenen Menge von bis zu 10 Gew.% eingesetzt.

Weitere geeignete Additive sind als Vernetzungsmittel dienende Epoxidharze, die die Temperaturstabilität der Beschichtung durch partielle Vernetzungsstellen verbessern. Außerdem können Füllstoffe zum Pigmentieren eingesetzt werden. Bei bestimmten Anwendungen hat sich auch die Mitverwendung von Treibmitteln als günstig erwiesen, um die Dichte der Beschichtung und damit das Gewicht des beschichteten Faserflächengebildes zu erniedrigen.

Wie schon erwähnt, werden die für die Beschichtung verwendeten Kunststoffmaterialien und Additive in Form einer Pulvermischung eingesetzt. Bei der Herstellung von Florteppichen und Bodenmatten aus Kokosfasern haben sich Mischungen aus Polyethylenen niedriger Dichte und säuremodifizierten Polyethylenen niedriger Dichte, die zu einem Gesamtsäuregehalt von 10 bis 30 Gew.% führen, als besonders brauchbar erwiesen. Darüber hinaus hat die Zugabe der oben erwähnten Gleitmittel zu guten Ergebnissen geführt. Mit diesem als Pulvermischung verwendeten Kunststoffmaterial werden Florteppiche bzw. Bodenmatten mit ausgezeichneten Eigenschaften erhalten, die die Eigenschaften von bisher üblichen Produkten mit PVC-Rückenbeschichtung zum Teil deutlich übertreffen. Dies gilt insbesondere für die Reißdehnung und die Kältefestigkeit (siehe das nachfolgende Beispiel).

Die Erfindung kann in vorteilhafter Weise zur einseitigen Kunststoffbeschichtung von praktisch allen Faserflächengebilden wie Geweben, Gewirken, Filzen oder Vliesen eingesetzt werden. Die zu beschichtenden Faserflächengebilde können darüber hinaus aus verschränkten Fasern (gewebte Velourware und/oder getuftete Velourware) aufgebaut sein. Besonders vorteilhaft ist die Erfindung bei Faserflächengebilden aus lose geschütteten Fasern ohne Orientierung oder aus Fasern, die zuvor geschnitten und senkrecht auf die Unterlage aufgebracht werden (siehe z.B. DE-PS 24 10 710 und DE-OS 37 27 474). Die erfindungsgemäß erhaltenen Produkte, insbesondere aus geschnittenen Kokosfasern, können als Teppiche, Bodenmatten (Fußmatten) und Auskleidungen (z.B. im Automobilbau) verwendet werden. In diesen Fällen beträgt die Beschichtungsstärke in der Regel mehrere Millimeter, was im Gegensatz zur Erfindung bei vorbekannten Beschichtungsverfahren große Probleme bereitet (siehe oben). Durch die Verwendbarkeit von Kunststoffen wie Polyethylen ergeben sich bei diesen Produkten Rückenbeschichtungen mit stark verbesserten mechanischen Eigenschaften gegenüber entsprechenden Produkten des Standes der Technik, so daß unter Umständen höhere Materialkosten dadurch ausgeglichen werden können, daß die Rückenbeschichtung im Vergleich zu vorbekannten Rückenbeschichtungen auf Basis von PVC dünner ausgebildet wird, ohne daß damit eine Qualitätsverminderung eintritt.

### Beispiel

Es wurde eine homogene Pulvermischung aus 25 Gew.% Polyethylen niedriger Dichte mit einem Schmelzindex MFI 190/2,16 von 17 bis 22 (g/10 min), 62,5 Gew.% eines 12% Acrylsäure enthaltenden Ethylencopolymerisats niedriger Dichte, das neben Acrylsäure auch n-Butylacrylestergruppen enthält und einen Schmelzindex MFI 190/2,16 von 6 bis 8 (g/10 min) aufweist, und 12,5 Gew.% Stearin hergestellt. Dieses Pulver wurde auf ein Transportband aufgebracht. Die Pulverschichtstärke wurde mit Hilfe eines Rakels auf 7,5 mm eingestellt. Die Geschwindigkeit des Transportbandes betrug 0,98 m/min. Mit Hilfe der aus der DE-PS 24 10 710 bekannten Vorrichtung wurde ein Kokosfaserstrang aus geschnittenen Kokosfasern auf die Pulverschicht aufgebracht. Das Transportband durchlief dann eine Heizstrecke von 18 m Länge, wobei die Erwärmung von unten durch Heizplatten erfolgte, die eine Temperatur von 171°C aufwiesen. Die Pulvermischung schmolz vollständig auf. Anschließend durchlief das Transportband eine 3 m lange Kühlzone mit wassergekühlten Kontaktplatten. Am Ende der Kühlstrecke betrug die Temperatur des Kunststoffmaterials 60 _{°} C.

Wie oben im Zusammenhang mit der erfindungsgemäßen Vorrichtung beschrieben, wurde das Faserflächengebilde sowohl vor der Heizstrekke als auch innerhalb der Heizstrecke mit geeigneten Vorrichtungen an die Pulverschicht bzw. die Schmelze angedrückt.

Aus dem so hergestellten beschichteten Faserflächengebilde wurden Bodenmatten geschnitten. Diese besaßen ausgezeichnete mechanische Eigenschaften einschließlich einer guten Noppenfestigkeit und waren den in herkömmlicher Weise hergestellten Bodenmatten völlig gleichwertig und bezüglich einiger Eigenschaften sogar überlegen. Stark verbessert gegenüber herkömmlichen Bodenmatten mit PVC-Rückenbeschichtung waren insbesondere die Rutschfestigkeit und die Kältefestigkeit.

## Patentansprüche

1. Verfahren zum einseitigen Beschichten von Flächengebilden aus ungeordneten oder geordneten Fasern mit Kunststoff, dadurch gekennzeichnet, daß das Flächengebilde von oben auf eine Schicht aus Kunststoffteilchen, die sich auf einer ebenen Unterlage befindet, aufgebracht und gegebenenfalls in die Schicht eingedrückt wird, die Kunststoffteilchen dann durch Erwärmen geschmolzen werden und anschließend der sich dadurch gebildete Verbund aus Faserflächengebilde und Kunststoff abgekühlt wird.

2. Verfahren nach Anspruch 1, bei dem die Schicht aus Kunststoffteilchen eine Dicke von 1 bis 10 mm besitzt.

3. Verfahren nach Anspruch 1 oder 2, bei dem das Faserflächengebilde ein Gewebe, ein Filz oder ein Vlies ist oder aus verschränkten Fasern aufgebaut ist oder aus lose geschütteten Fasern ohne Orientierung oder aus Fasern besteht, die zuvor geschnitten und senkrecht zur Unterlage in die Schicht aus Kunststoffteilchen eingebracht werden.

4. Verfahren nach einem der Ansprüche 1 bis 3, bei dem die Kunststoffteilchen aus Polyolefinen bestehen.

5. Verfahren nach einem der Ansprüche 1 bis 4, bei dem die Teilchengröße der Kunststoffteilchen 30 bis 500 um beträgt.

6. Verfahren nach einem der vorhergehenden Ansprüche, bei dem das Faserflächengebilde während des Erwärmens in die Schicht aus Kunststoffteilchen eingedrückt wird.

7. Verfahren nach einem der vorhergehenden Ansprüche, bei dem das Faserflächengebilde aus Kokosfasern besteht, die zuvor geschnitten worden sind und senkrecht zur Unterlage in die Schicht aus Kunststoffteilchen eingebracht werden.

8. Verfahren nach Anspruch 7, bei dem die Kunststoffteilchen aus einer Pulvermischung aus Polyethylen und durch innere Weichmachung modifiziertem Polyethylen bestehen.

9. Verfahren nach Anspruch 8, bei dem die Kunststoffteilchen aus einer Pulvermischung von Polyethylen niedriger Dichte und carbonsäuremodifizierten Polyethylenen niedriger Dichte bestehen.

10. Verfahren nach Anspruch 8 oder 9, bei dem der Pulvermischung Gleitmittel, insbesondere in Form von kurzkettigen Kohlenwasserstoffen zugesetzt werden.

11. Vorrichtung zur Durchführung des Verfahrens gemäß Anspruch 1, gekennzeichnet durch
a) ein Transportband (1) zur Aufnahme der Schicht aus Kunststoffteilchen (14),
b) eine Dosiervorrichtung (3) zur Aufbringung der Schicht aus Kunststoffteilchen (14),
c) eine Zuführungsvorrichtung (6) zur Aufbringung des Faserflächengebildes (15) oder die das Faserflächengebilde (15) bildenden Fasern auf die Schicht aus Kunststoffteilchen (14),
d) eine Heizstrecke (7),
e) eine Kühlstrecke (12) und
f) eine Aufnahmevorrichtung (13) für das einseitig beschichtete Faserflächengebilde (16).

12. Vorrichtung nach Anspruch 11, bei der es sich bei der Dosiervorrichtung (3) um einen Dosiertrichter mit einem Fülltrichter (17) und einer höhenverstellbaren Vorderkante (18) handelt.

13. Vorrichtung nach Anspruch 11, bei der die Dosiervorrichtung (3) eine genutete Dosierwalze (19) mit aufgesetztem Fülltrichter (20) ist.

14. Vorrichtung nach einem der Ansprüche 11 bis 13, bei der der Dosiervorrichtung (3) ein Rakel (2, 22, 23) nachgeschaltet ist.

15. Vorrichtung nach einem der Ansprüche 11 bis 14, die eine Andrückvorrichtung (8) zwischen Zuführungsvorrichtung (6) und Heizstrecke (7) aufweist.

16. Vorrichtung nach einem der Ansprüche 11 bis 15, bei der innerhalb der Heizstrecke eine Andrückvorrichtung (10) angeordnet ist.

17. Vorrichtung nach Anspruch 16, bei der die Andrückvorrichtung (10) vor dem Ende der Heizstrecke (7) und vorzugsweise nach 2/3 der Heizstrecke (7) angeordnet ist.

18. Verwendung von nach dem Verfahren gemäß einem der Ansprüche 1 bis 10 hergestellten, einseitig mit Kunststoff beschichteten Faserflächengebilden als Teppiche, Bodenmatten und Auskleidungen.
